Europäisches Patentamt

European Patent Office

Office européen des brevets

(11) Veröffentlichungsnummer: **0 155 678**
A2

(12) # EUROPÄISCHE PATENTANMELDUNG

(21) Anmeldenummer: 85103208.6

(22) Anmeldetag: 19.03.85

(51) Int. Cl.⁴: **B 29 C 67/14**
B 29 C 43/12

(30) Priorität: 19.03.84 DE 3410050

(43) Veröffentlichungstag der Anmeldung:
25.09.85 Patentblatt 85/39

(84) Benannte Vertragsstaaten:
DE FR GB IT

(71) Anmelder: Krauter, Manfred
Holzwiesenweg 7
D-7062 Rudersberg-Steinenberg(DE)

(72) Erfinder: Krauter, Manfred
Holzwiesenweg 7
D-7062 Rudersberg-Steinenberg(DE)

(74) Vertreter: Strehl, Schübel-Hopf, Schulz
Widenmayerstrasse 17 Postfach 22 03 45
D-8000 München 22(DE)

(54) Verfahren zur Herstellung von faserverstärkten Kunststoff-Formteilen.

(57) Die Erfindung betrifft ein Verfahren zur Herstellung von faserverstärkten Kunststoff-Formteilen, bei dem in eine Form Fasermaterial, z.B. Glasfasermaterial, eingelegt wird und mit Hilfe eines Drucksackes flüssige Kunststoffmasse in das Fasermaterial eingepreßt wird. Zur Verhinderung von Luftblasen und Fehlstellen an die keine Kunststoffmasse gelangt ist, ist gemäß der Erfindung vorgesehen, daß ein grobmaschiges Netz auf oder zwischen das Fasermaterial gelegt wird. Dieses Netz garantiert bei dem Preßvorgang das Entweichen der in dem Fasermaterial vorhandenen Luft.

FIG.1

EP 0 155 678 A2

Manfred Krauter
EPA-27 041

0155678

Verfahren zur Herstellung von faserverstärkten Kunststoff-Formteilen

Beschreibung

Die Erfindung betrifft ein Verfahren zur Herstellung von faserverstärkten Kunststoff-Formteilen.

Bei der Herstellung von faserverstärkten Kunststoffteilen hat es sich im Hinblick auf die erzielbare Festigkeit der Teile als vorteilhaft erwiesen, den Faseranteil groß zu machen. Hierzu ist ein Kaltpreßverfahren entwickelt worden, bei dem das Fasermaterial nach Durchtränken mit Harz bis zum Aushärten des Harzes in einer Presse hohem Druck ausgesetzt wird, um das Harz weitgehend auszupressen. Der Faseranteil läßt sich bei diesem Verfahren nicht über etwa 35% steigern. Vor allem ist es mit diesem Verfahren nicht möglich, Formteile mit Hinterschneidungen herzustellen.

Aus der US-PS 3 050 780 ist ein Verfahren bekannt, mit dem faserverstärkte Formteile mit Hinterschneidungen herstellbar sind. Danach wird in eine Hohlform Glasfasermaterial eingelegt, sodann wird auf die Innenseite des Glasfasermaterials Kunststoffmasse aufgebracht und mit Hilfe eines Drucksackes in das Glasfasermaterial eingepreßt und dabei in dem Glasfasermaterial verteilt. Nach dem Aushärten des Kunststoffes wird der Drucksack entspannt und aus dem auf diese Weise gebildeten Hohlkörper herausgenommen. Auf diese Weise können Hohlkörper mit Hinterschneidungen geformt werden.

Bei diesem bekannten Verfahren ist nachteilig, daß sich die Kunststoffmasse beim Aufblasen des Drucksackes nicht gleichmäßig in dem Glasfasermaterial verteilt. Der Drucksack legt sich beim Aufblasen allseitig in das Glasfasermaterial an und preßt es zusammen, so daß die in dem Glasfasermaterial vorhandene Luft nur noch schwer entweichen kann und auch für das Kunstharz der Strömungswiderstand innerhalb des Glasfasermaterials so groß wird, daß es sich nur schwer verteilt. Die Folge davon ist, daß die mit diesem Verfahren gefertigten Teile nicht fehlerfrei gefertigt werden können, sondern eine große Anzahl von Luftblasen oder von Stellen enthalten, an die kein Kunstharz gelangt ist. Aus diesem Grunde ist das bekannte Verfahren beispielsweise nicht zur Herstellung von Schutzhelmen geeignet, an die erhöhte Anforderungen bezüglich Sicherheit und Festigkeit gestellt werden, wie z.B. bei Motorradfahrer-Schutzhelmen.

Für derartige Schutzhelme ist das bekannte Verfahren daher auch nicht eingesetzt worden; die im Markt befindlichen Schutzhelme sind bisher als Handlaminate gefertigt worden, deren Harzanteil hoch ist, und die daher schwer sind und hohe Materialkosten haben.

Das im Stand der Technik (US PS 3 050 780) bekannte Verfahren hat weiter noch den Nachteil, daß der Druckaufbau innerhalb der Form nicht richtig beherrscht werden kann, so daß wegen eines ungleichmäßigen Druckes innerhalb der Form die damit gefertigten Formteile noch Fehlstellen aufweisen, bei denen das Glasfasermaterial nicht vollständig mit Kunstharzmasse vernetzt ist.

Aufgabe der Erfindung ist dementsprechend, die im Stand der Technik gegebenen Verfahren so auszugestalten, daß die Kunststoffmasse gleichmäßig in das gesamte Fasermaterial einströmen kann, und daß die Bildung von Luftblasen oder Fehlstellen verhindert wird. Dabei soll weiter ein Verfahren bereitgestellt werden, mit dem es möglich ist, den Druckaufbau beim Auspressen des mit Kunstharz getränkten Materials zu steuern und das Auspressen in allen Teilen der Form gleichmäßig zu gestalten.

Diese Aufgabe wird mit einem Verfahren nach dem Oberbegriff des Patentanspruches 1 gelöst, das erfindungsgemäß nach der im Kennzeichenteil dieses Anspruches angegebenen Weise ausgestaltet ist.

Weitere, vorteilhafte Ausgestaltungen der Erfindung ergeben sich aus den Unteransprüchen.

Nach der Erfindung wird auf das Glasfasermaterial ein grobmaschiges Netz aufgelegt und beim Herstellungsvorgang mit in die Kunststoffmasse eingebettet. Insbesondere wird dieses grobmaschige Netz zwischen zwei Lagen von Fasermaterial gelegt. Das Fasermaterial besteht üblicherweise aus Strängen oder Bündeln von zusammengesponnenen mikroskopisch feinen Fasern. Das grobmaschige Netz wirkt für die Luft, die in dem Fasermaterial enthalten ist und die beim Eindrücken der Kunstsstoffmasse entweichen muß, wie eine Drainagelage. Infolge der grobmaschigen Struktur bilden sich in dieser Struktur entsprechende kleine Hohlräume, in die bei dem Preßvorgang die Luft, die in dem Fasermaterial enthalten ist, eintreten kann. Die Luft entströmt entlang den Flächen des Netzes nach außen und ermöglicht ein Nachfließen der Kunstharzmasse ohne Bildung von Luftblasen. Die Maschenweite des Netzes beträgt vorzugsweise etwa 1 mm und mehr. Die Fäden des Netzes sind im Gegensatz zu dem Gewebe oder dem Geflecht des Fasermaterials nicht aus einzelnen Fasern zusammengesponnen, sondern aus massivem monofilem Material, so daß sie kein Harz aufsaugen. "Netz" im Sinne der Erfindung ist jedes grobmaschige Geflecht aus solchen Fäden. Es kommt nicht darauf an, daß die Fäden miteinander verknotet oder verschweißt sind.

Der Durchmesser der einzelnen Fäden oder Adern des Netzes ist vorzugsweise größer als jener der Faserbündel oder Fäden, zu denen das Fasermaterial versponnen oder verzwirnt ist; er kann jedoch auch gleich diesem Durchmesser solcher Faserbündel oder Faserstränge sein, da es hauptsächlich darauf ankommt, daß von den Maschen des Netzes kleine Hohlräume offengehalten werden, in die die Luft einströmen und entlang denen sie nach außen abfließen kann. Die Fäden des Netzes haben vorzugsweise eine glatte Oberfläche, damit der Strömungswiderstand für das nachfließende Harz gering ist.

- 4 -

Vorzugsweise wird für das Netz ein elastisches und unter Zug dehnbares Material verwendet. Dies hat insbesondere den Vorteil, daß beim Einpressen der Kunststoffmasse mit Hilfe des Drucksackes das Netz etwas gedehnt wird und damit eine Faltenbildung des Netzes verhindert wird. Es ist aber je nach Gestalt des Formlings auch möglich, ein Material zu verwenden, das sich nicht dehnt, wie z.B. ein Drahtgitter (Fliegendraht). Um bei gekrümmten Flächen der Form zu verhindern, daß beim Anpressen des flachen Netzes an die Innenwand der Form bzw. des Drucksackes sich Knicke und Falten bilden, wird das Netz in einzelne Stücke so zerschnitten, daß sie der Form angepaßt werden können.

Die Beschaffenheit und Kompressibilität des Netzmaterials sollte so sein, daß bei dem Preßvorgang, der mit dem Drucksack ausgeführt wird, die mit Kunstharz getränkten Faserbündel wesentlich leichter zusammengequetscht und verformt werden, als das Entlüftungsnetz, das für die Bildung der Luftsammelräume notwendig ist. Als Material für das Netz wird vorzugsweise Polyamid, Polycarbonat oder Polyäthylen verwendet.

Das erfindungsgemäße Verfahren ist insbesondere dazu geeignet, Hohlkörper mit Hinterschneidungen, wie z.B. Kalotten von Motorradfahrer-Schutzhelmen oder auch von Bootskörpern, z.B. von Kajaks, herzustellen. Ein weiterer Vorzug dieses Verfahrens liegt darin, daß auch besondere Ausformungen, wie Nuten, Ausbuchtungen usw. ohne Mühe hergestellt werden können, da der Drucksack sich an die entsprechenden Konturen der Form genau anlegt.

Mit dem erfindungsgemäßen Verfahren ist es auch möglich, sogenannte Sandwich-Bauteile herzustellen, bei denen zusätzlich beispielsweise geformte PVC-Platten oder Schaumplatten zwischen die einzelnen Lagen des Fasermaterials zwischengelegt werden.

Der Drucksack ist vorzugsweise so gestaltet, daß er sich beim Aufblasen zuerst in den Gebieten, die von den aus der Form austretenden Teilen des Fasermaterials entfernt liegen, an die Innenwand der Form anlegt. Dazu reicht er dann, wenn er ohne Druck ist, unten etwas näher an die mit dem Fasermaterial belegte Innenwand der Form heran als im oberen Bereich, damit das Material bei Aufblasen des Preßsackes langsam von unten nach oben gedrückt wird. Die Luft wird dann leicht zum Rand der Form und nach außen abgeführt.

Das Netz wird vorzugsweise zwischen zwei Lagen von Glasfasermaterial gelegt, da dann beim Einpressen der Kunststoffmasse die Luft von beiden Seiten her in die von dem Geflecht gebildeten Luftsammelräume einströmen kann.

Im folgenden wird das Verfahren anhand der in den Figuren dargestellten Ausführungsbeispiele beschrieben und näher erläutert.

Figur 1     veranschaulicht den Grundgedanken der Erfindung;

Figur 2     zeigt die zur Durchführung des erfindungsgemäßen Verfahrens benützte Vorrichtung;

Figur 3 und 4     zeigen schematisch den Ablauf des erfindungsgemäßen Verfahrens;

Figur 5     zeigt schematisch eine besondere Ausgestaltung des zur Verfahrensdurchführung benutzten Drucksackes.

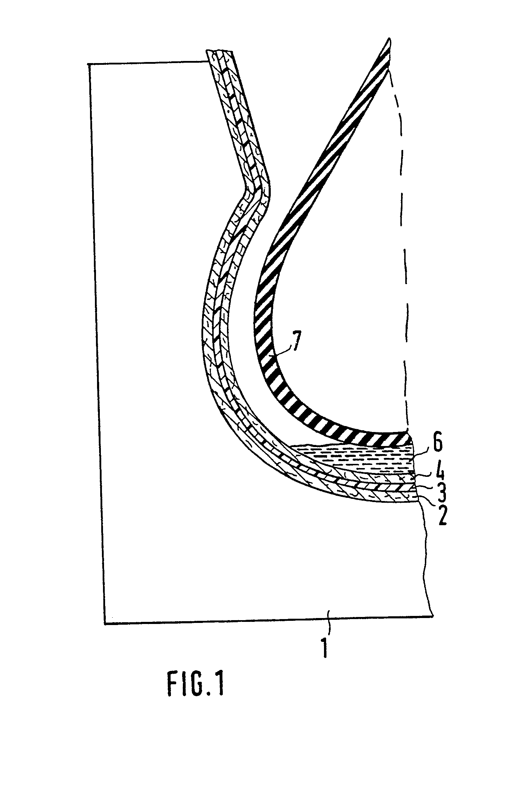

Die Figur 1 zeigt ausschnittsweise eine Hohlform 1, die in dem dargestellten Beispielsfall für die Herstellung einer Schale eines Schutzhelmes dienen kann. Auf die Innenwand der Form wird eine erste Glasfasermatte 2 gelegt. Auf diese Glasfasermatte 2 wird dann ein grobmaschiges Netz 3 aufgelegt. Auf dieses Netz 3 wird wiederum ein Glasfasermaterial aufgelegt, z.B. ein Glasfasergewebe. Anschließend wird flüssiges Kunstharz 6 eingefüllt. Im Anschluß daran wird der Drucksack 7 aufgeblasen. Er drückt das flüssige Kunstharz 6 in das Glasfasergewebe 4 und die Glasfasermatte 2. Luft, die sich in dem Gewebe 4 oder der Matte 2 befindet, entweicht in die von dem grobmaschigen Netz 3 gebildeten Hohlräume und strömt entlang der "Drainageschicht", die durch das Netz 3 gegeben ist, nach außen ab. Nach dem Aushärten des Kunstharzes wird der Drucksack 7 entspannt und aus dem Hohlraum herausgezogen und das Formteil wird aus der Form 1 herausgenommen.

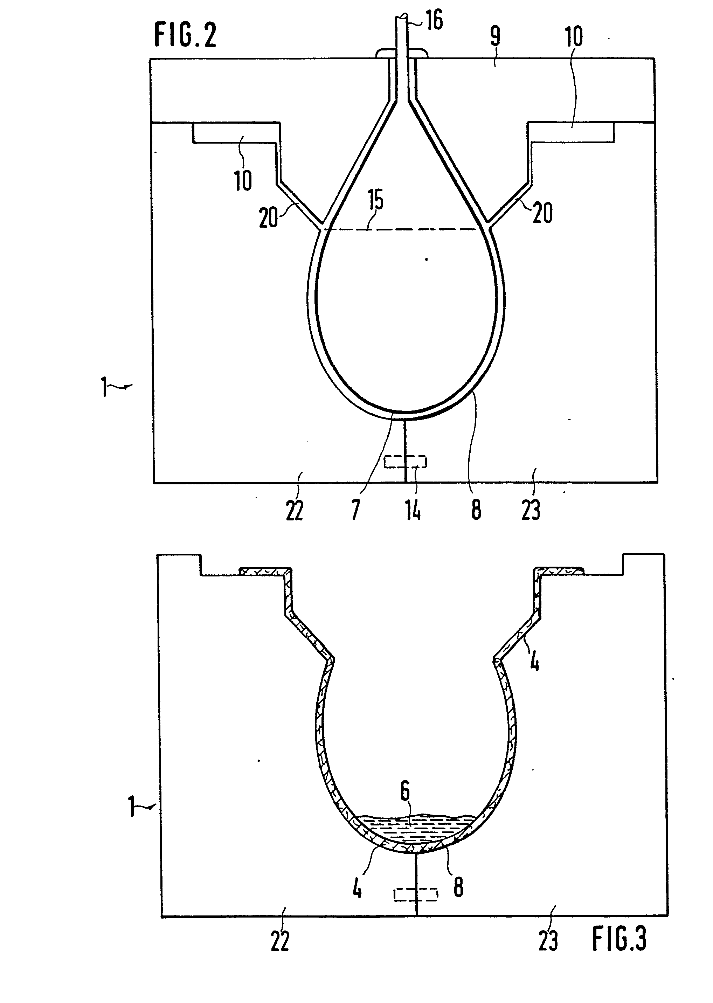

Die Figur 2 zeigt schematisch die zur Durchführung des Verfahrens benützte Vorrichtung. Die untere Formhälfte ist in zwei Halbschalen 22, 23 teilbar, wobei diese beiden Halbschalen mit einer Führung 14 versehen sind, um sie paßgenau zusammenzusetzen. Diese beiden Halbschalen 22, 23 umschließen einen hinterschnittenen Hohlraum, dessen Innenwand 8 der Gestalt des herzustellenden Formkörpers entspricht. In die Halbschalen ist eine Trennkontur eingearbeitet, die in der Figur 2 durch die gestrichelte Linie 15 angedeutet ist.

Oberhalb der Trennkontur 15 verlaufen nach außen Spalte 20, die an ihrem äußeren Ende nach oben abknicken und in einen Überlauf 10 münden. Es kann auch ein umlaufender, der Formgebung des oberen Verschlußteiles 9 entsprechender Spalt vorgesehen sein.

Durch das Oberteil 9 ist eine Rohrleitung 16 durchgeführt, an der unten der Drucksack 7 angesetzt ist. Durch die Rohrleitung kann Druckmittel in den Drucksack 7 hineinströmen und diesen aufblasen, so daß er sich an die Innenwand 8 der Form andrückt.

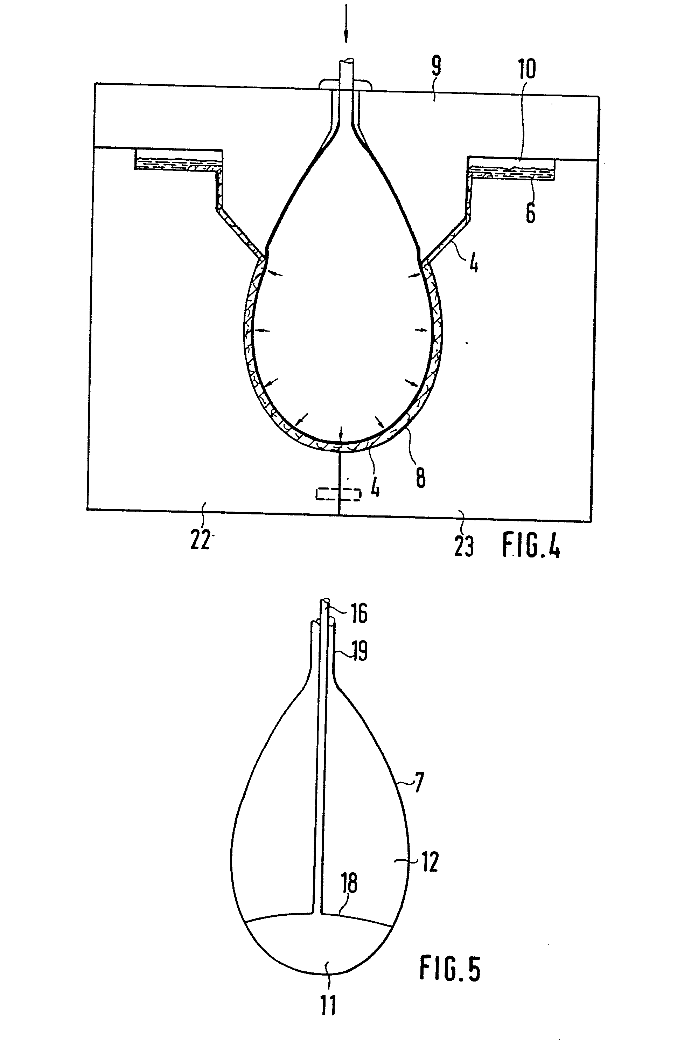

In den Figuren 3 und 4 ist schematisch der Verfahrensgang dargestellt. Auf die Innenwand 8 der Form 1 wird das Fasermaterial 4, beispielsweise eine Glasfasermatte, aufgelegt und entlang der Spalte 20 bis zu dem Überlauf 10 geführt. Auf das Fasermaterial 4 wird sodann eine flüssige, aushärtbare Kunststoffmasse 6 gefüllt.

Nun wird der Drucksack eingeführt. Anschließend wird das Oberteil 9 aufgesetzt und es wird über die Rohrleitung 16 der Drucksack aufgeblasen. Der Drucksack 7 ist so gestaltet, daß er sich an den von der Spalte 20 am weitesten entfernten Stellen zuerst an die Innenwand 8 der Form anlegt. Die Kunstharzmasse 6 wird von dem Drucksack dann entlang der Form der Schale bis zu dem umlaufenden Spalt 20 hochgepreßt, und tritt hinter dem Spalt in den Überlauf 10 aus. Nach dem Aushärten der Kunstharzmasse wird das Druckmittel aus dem Drucksack 7 abgelassen, das Verschlußteil 9 abgehoben und die untere Hälfte der Form wird in die beiden Halbschalen 22, 23 getrennt. Das Fertigteil kann jetzt aus der Form entnommen werden.

Die Figur 5 zeigt schematisch ein besonderes Ausführungsbeispiel für einen Drucksack, mit dem erreicht werden kann, daß der Drucksack sich zunächst an der von den Spalten 20 am weitesten entfernten Stelle, d.h. in Figur 4 an dem Boden der Innenwand 8 der Form ausdehnt und das flüssige Kunstharz langsam durch das Fasermaterial hindurch nach oben in den Überlauf drückt. Hierzu weist der Drucksack zwei Kammern 11, 12 auf, die durch eine Membran 18 voneinander getrennt sind. Die untere Druckkammer 11 wird durch eine innere Rohrleitung 16 und die äußere Druckkammer 12 durch die äußere Rohrleitung 19 mit Druckmittel versorgt. Die Druckkammer 11 wird zuerst mit Druckmittel versorgt, dann die äußere Druckkammer 12. Der Druckaufbau wird so gesteuert, daß die Druckkammer 11 mit einem höheren Druck gefahren wird als die äußere Druckkammer 12.

- 8 -

PATENTANSPRÜCHE:

1.  Verfahren zur Herstellung von faserverstärkten Kunststoff-Formteilen, in dem in eine Form (1) Fasermaterial (2, 4) eingelegt wird und flüssige oder pastöse Kunststoffmasse (6) in das Fasermaterial mit Hilfe von der Gestalt der Form angepaßten oder sich anpassenden, druckausübenden Teilen (7) eingepreßt und dann ausgehärtet wird,
dadurch g e k e n n z e i c h n e t, daß zum Abführen der im Fasermaterial enthaltenen Luft zwischen das Werkzeug (7) und die Form (1) ein gegenüber der Struktur des Fasermaterials (2, 4) grobmaschiges Netz (3) mit Fäden aus im wesentlichen massivem Material eingelegt und in die Kunststoffmasse mit eingebettet wird.

2.  Verfahren nach Anspruch 1,
dadurch g e k e n n z e i c h n e t,
daß ein Netz verwendet wird, dessen Fäden eine glatte Oberfläche haben.

3.  Verfahren nach Anspruch 1 oder 2,
dadurch g e k e n n z e i c h n e t,
daß das Netz (3) zwischen zwei Lagen aus Fasermaterial (2, 4) gelegt wird.

0155678

4.    Verfahren nach einem der Ansprüche 1 bis 3, dadurch g e k e n n z e i c h n e t, daß ein Netz verwendet wird, dessen Maschenweite mehr als 1 mm beträgt.

5.    Verfahren nach einem der Ansprüche 1 bis 4, dadurch g e k e n n z e i c h n e t, daß der Durchmesser der Fäden des Netzes (3) gleich oder größer als der Bündeldurchmesser des Fasermaterials gewählt ist.

6.    Verfahren nach einem der Ansprüche 1 bis 5, dadurch g e k e n n z e i c h n e t, daß der Durchmesser der Fäden des Netzes größer als etwa 0,2 mm ist.

7.    Verfahren nach einem der Ansprüche 1 bis 6, dadurch g e k e n n z e i c h n e t, daß ein elastisches, dehnbares Netz verwendet wird.

8.    Verfahren nach einem der Ansprüche 1 bis 7, dadurch g e k e n n z e i c h n e t, daß ein Geflecht aus Polyamid, Polyäthylen, Polycarbonat oder Metall verwendet wird.

9.    Verfahren nach einem der Ansprüche 1 bis 8, dadurch g e k e n n z e i c h n e t, daß das Fasermaterial über einen Spalt (20) aus der

0155678

Form (1) herausgeführt wird, daß die Form mit einem angepaßten Verschlußteil (9) verschlossen wird, und daß der überschüssige Anteil der in die Form eingefüllten Kunststoffmasse bei Anpressen des Druck ausübenden Teils (7) gegen die Innenwand der Form entlang der Quetschkanten (20) in einen Überlauf (10) gedrückt wird.

10. Verfahren nach einem der Ansprüche 1 bis 9, dadurch g e k e n n z e i c h n e t, daß als Druck ausübendes Teil ein mit Druckmittel ausdehnbarer Drucksack (7) verwendet wird.

11. Verfahren nach Anspruch 10, dadurch g e k e n n z e i c h n e t, daß der Druck des Drucksackes während einer ersten Zeitspanne auf einem ersten Druck und sodann für eine zweite Zeitspanne auf einem zweiten Druck gehalten wird, wobei der zweite Druck höher als der erste ist.

12. Verfahren nach Anspruch 10, dadurch g e k e n n z e i c h n e t, daß der Drucksack (7) so mit Druckmittel beaufschlagt wird, daß er sich zuerst in dem von den Quetschkanten (20) entfernt liegenden Gebiet an die Innenwand der Form anlegt.

13.     Verfahren nach Anspruch 10,

dadurch  g e k e n n z e i c h n e t, daß ein zwei

oder mehr Druckkammern (11, 12) aufweisender Drucksack (7) verwendet wird und die Druckkammern in vorgegebener Zeitfolge mit vorgegebenen Drücken beaufschlagt werden.


14.     Vorrichtung zur Durchführung des Verfahrens nach

Anspruch 10, dadurch  g e k e n n z e i c h n e t, daß

der Drucksack (7) mit zwei oder mehr Druckkammern (11, 12)

versehen ist.


RS/JG

FIG.1

0155678

FIG.2

FIG.3

FIG.4

FIG.5